# EUROPÄISCHE PATENTANMELDUNG

(11) **EP 2 631 862 A1**
(43) Veröffentlichungstag der Anmeldung: **28.08.2013**
(21) Anmeldenummer: 13156542.6
(22) Anmeldetag: 25.02.2013
(51) Int. Cl.: G06Q 20/38

(54) **Verfahren und Vorrichtungen zum Durchführen einer Transaktion**

(30) Priorität: 24.02.2012 DE 102012101515
(71) Anmelder: Star Finanz-Software Entwicklung und Vertriebs GmbH, 20097 Hamburg (DE)
(72) Erfinder: Wittkamp, Bernd, 20097 Hamburg (DE)
(74) Vertreter: Witte, Weller & Partner

(57) **Zusammenfassung**

Verfahren (46) zum Durchführen einer Transaktion auf einer Zustandsmaschine (14) unter Verwendung eines Datenaustauschs auf einem ersten und einem zweiten Kommunikationskanal (16, 18), wobei der erste und der zweite Kommunikationskanal (16, 18) voneinander verschieden sind, das Verfahren (46) mit den folgenden Schritten: Erzeugen (S10) von Transaktionsdaten (42) für eine Transaktion mittels einer ersten Applikation (32), Senden (S12) der Transaktionsdaten (42) mittels der ersten Applikation (32), wobei die erste Applikation (32) Teil des ersten Kommunikationskanals (16) ist, Senden (S18) einer auf die Transaktionsdaten (42) bezogenen Transaktionsbestätigungsanforderung mittels der ersten Applikation (32) oder einer zweiten Applikation (34), wobei die zweite Applikation (34) Teil des zweiten Kommunikationskanals (18) ist, Bereitstellen (S24) einer Transaktionsbestätigung (44) mittels der zweiten Applikation (34), wobei die zweite Applikation (34) Teil eines zweiten Kommunikationskanals (18) ist, und Abfragen (S26) der Transaktionsbestätigung (44) mittels der ersten Applikation (32), wobei die erste Applikation (32) keinen Zugriff auf den zweiten Kommunikationskanal (18) hat und insbesondere die zweite Applikation (34) keinen Zugriff auf den ersten Kommunikationskanal (16) hat.

## Beschreibung

Die Erfindung betrifft Verfahren zum Durchführen einer Transaktion auf einer Zustandsmaschine unter Verwendung eines Datenaustauschs auf einem ersten und einem zweiten Kommunikationskanal, wobei der erste und der zweite Kommunikationskanal voneinander verschieden sind.

Die Erfindung betrifft außerdem Vorrichtungen zum Durchführen einer Transaktion unter Verwendung eines Datenaustauschs auf einem ersten und einem zweiten Kommunikationskanal, wobei der erste und der zweite Kommunikationskanal voneinander verschieden sind und wobei die jeweilige Vorrichtung als Zustandsmaschine ausgeführt ist und mindestens einen Prozessor und mindestens einen Speicher mit programmatischen Instruktionen aufweist.

Die Erfindung betrifft auch ein computerlesbares Medium mit programmatischen Instruktionen, die, wenn sie auf mindestens einem Prozessor ausgeführt werden, den mindestens einen Prozessor veranlassen, ein Verfahren zum Durchführen einer Transaktion ausführen.

Die Erfindung betrifft schließlich auch die Verwendung eines Benutzerendgeräts zum Durchführen einer Transaktion unter Verwendung eines Datenaustauschs auf einem ersten und einem zweiten Kommunikationskanal, wobei der erste und der zweite Kommunikationskanal voneinander verschieden sind.

Die Anzahl der finanziellen Transaktionen, die ohne Zwischenschaltung einer Filiale eines Geldinstituts getätigt werden, hat in den vergangenen Jahren stets zugenommen. Es wird erwartet, dass sich dieser Trend in den nächsten Jahren fortsetzt. Da eine elektronisch durchgeführte Transaktion kein persönliches Erscheinen erfordert und keine handschriftliche Urkunde gefertigt wird, bestehen besondere Möglichkeiten, solche Transaktionen zu manipulieren. Es sind daher besondere Anstrengungen erforderlich, um sicherzustellen, dass elektronisch eingereichte Transaktionen nicht unrechtmäßig von einem Dritten durchgeführt werden können, und dass sich elektronisch eingereichte Transaktionen sicher auf einen berechtigten Auftraggeber zurückführen lassen.

Um eine Transaktion elektronisch durchzuführen, ist es heute in der Regel erforderlich, dass sich ein Benutzer als Kontoinhaber identifiziert und eine Transaktion oder mehrere Transaktionen mittels einer Transaktionsbestätigung autorisiert. Am gebräuchlichsten ist hier die Verwendung einer Transaktionsnummer (TAN), die nur dem Benutzer bekannt ist, nur eine begrenzte Gültigkeit hat und sich nur mit einer sehr geringen Wahrscheinlichkeit erraten lässt. Heute besteht eine Transaktionsnummer üblicherweise aus sechs Ziffern. Im Rahmen der Erfindung sollen unter dem Begriff der Transaktionsbestätigung aber auch allgemeine Zeichenfolgen verstanden werden, die die zuvor genannten Bedingungen erfüllen. Insbesondere sollen auch alphanumerische Zeichenfolgen als Transaktionsbestätigung verstanden werden.

Trotz dieser Sicherheitsmechanismen verbleibt eine Gefahr, dass ein unberechtigter Dritter elektronische Transaktionen beauftragen könnte. Kann der Dritte nämlich die elektronische Kommunikation mit dem Geldinstitut abhören oder sich in die elektronische Kommunikation zwischenschalten, stehen ihm alle Informationen zur Verfügung, um eine Transaktion zu manipulieren oder eine unberechtigte Transaktion zu beauftragen. Eine solche Manipulation kann in der Regel vom Geldinstitut nicht erkannt werden, so dass die unberechtigte Transaktion erst, in der Regel mit einer erheblichen zeitlichen Verspätung, vom Berechtigten selbst erkannt werden kann. Neben einem eventuellen finanziellen Schaden führt die Aufklärung derartiger unberechtigter Transaktionen zu einem erheblichen Aufwand, sowohl seitens des Geldinstituts als auch seitens des Berechtigten.

Eine Möglichkeit, dieser Art der Manipulation zu begegnen, bietet die so genannte Kanaltrennung. Diese bedeutet, dass mindestens zwei Teile von Daten, die zum Durchführen einer elektronisch eingereichten Transaktion erforderlich sind, über zwei verschiedene Benutzerendgeräte abgewickelt werden. Zwei der bekanntesten Verfahren sind dabei das smsTAN-Verfahren und das chipTAN-Verfahren. Beim smsTAN-Verfahren wird die Transaktion online, das heißt über das Internet, beauftragt, die für die Bestätigung der Transaktion erforderliche Transaktionsbestätigung erhält der Benutzer aber über sein Mobiltelefon. Beim chipTAN-Verfahren verhält es sich ähnlich, doch kommt hier ein elektronischer TAN-Generator zum Einsatz, der aus einer am Computerbildschirm dargestellten codierten Grafik die Transaktionsbestätigung errechnet und anzeigt. Diese zusätzliche Sicherheit führt allerdings auch zu zusätzlichen Kosten. Außerdem ist es seitens der Benutzer unerwünscht, dass ein zweites Benutzerendgerät zum Durchführen einer elektronischen Transaktion erforderlich ist.

Es ist daher eine Aufgabe der vorliegenden Erfindung, eine vereinfachte Möglichkeit zum Durchführen solcher Transaktionen aufzuzeigen. Dabei ist es insbesondere gewünscht, eine Möglichkeit aufzuzeigen, die im Hinblick auf mögliche finanzielle Schäden bei einem Missbrauch als hinreichend sicher und damit zulässig für den Finanzverkehr erachtet werden kann.

Gemäß einem ersten Aspekt wird die Aufgabe gelöst durch ein Verfahren zum Durchführen einer Transaktion auf einer Zustandsmaschine unter Verwendung eines Datenaustauschs auf einem ersten und einem zweiten Kommunikationskanal, wobei der erste und der zweite Kommunikationskanal voneinander verschieden sind, das Verfahren mit den folgenden Schritten:
- Erzeugen von Transaktionsdaten für eine Transaktion mittels einer ersten Applikation,
- Senden der Transaktionsdaten mittels der ersten Applikation, wobei die erste Applikation Teil des ersten Kommunikationskanals ist,
- Senden einer auf die Transaktionsdaten bezogenen Transaktionsbestätigungsanforderung mittels der ersten Applikation oder einer zweiten Applikation, wobei die zweite Applikation Teil des zweiten Kommunikationskanals ist,
- Bereitstellen einer Transaktionsbestätigung mittels der zweiten Applikation, wobei die zweite Applikation Teil eines zweiten Kommunikationskanals ist, und
- Abfragen der Transaktionsbestätigung mittels der ersten Applikation,
wobei die erste Applikation keinen Zugriff auf den zweiten Kommunikationskanal hat und insbesondere die zweite Applikation keinen Zugriff auf den ersten Kommunikationskanal hat.

Die Erfindung bietet unter anderem die Besonderheit, dass eine Transaktion sicher unter Verwendung von zwei Kommunikationskanälen mit lediglich einem Benutzerendgerät erfolgen kann. Dies entbindet den Benutzer von dem Erfordernis, ein zweites Benutzerendgerät zum sicheren Durchführen einer Transaktion bereitzuhalten.

Es werden eine erste und eine zweite Applikation bereitgestellt, die dafür ausgebildet sind, auf ein und demselben Benutzerendgerät oder Zustandsmaschine ausgeführt zu werden. Die erste Applikation und die zweite Applikation nehmen dabei unterschiedliche Funktionen wahr.

Die erste und die zweite Applikation sind voneinander verschieden. Es muss sichergestellt sein, dass weder die erste noch die zweite Applikation alle Schritte von der Eingabe der Transaktionsdaten bis zur Eingabe der Transaktionsbestätigung alleine durchführt. Vielmehr soll es für das Durchführen einer Transaktion zwingend erforderlich sein, dass bestimmte Schritte zum Durchführen der Transaktion innerhalb der ersten Applikation stattfinden und weitere Schritte innerhalb der zweiten Applikation stattfinden.

Bei dem Datenaustausch, der während des Durchführens der Transaktion entsteht, ist die erste Applikation Teil eines ersten Kommunikationskanals und ist die zweite Applikation Teil eines zweiten Kommunikationskanals. Da die Kommunikationskanäle ausgehend von der jeweiligen Applikation getrennt werden, können die erste und die zweite Applikation dennoch über dieselbe physikalische Schicht, insbesondere ein drahtloses Datenübertragungsnetzwerk, Daten übertragen. Selbst wenn es einem Angreifer gelingt, die Kommunikation in einem der Kommunikationskanäle abzuhören oder sich in einen der Kommunikationskanäle zwischenzuschalten, so fehlen ihm die Informationen aus dem anderen Kommunikationskanal, die zum Durchführen der Transaktion zwingend erforderlich sind. Auf diese Weise wird gewährleistet, dass Transaktionen auf lediglich einer Zustandsmaschine durchgeführt werden können.

Die erste und die zweite Applikation werden auf derselben Zustandsmaschine ausgeführt. Die erste und die zweite Applikation sind demnach auch dafür ausgebildet, auf derselben Zustandsmaschine ausgeführt zu werden. Konkret sind die programmatischen Instruktionen, die die erste und die zweite Applikation bilden, so ausgebildet, dass sie von einem Prozessor oder mehreren Prozessoren der Zustandsmaschine ausgeführt werden können.

Bei einigen Ausführungsformen ist die Kommunikation der ersten Applikation und der zweiten Applikation dadurch getrennt, dass jede Applikation einen eigenen Kommunikationskanal aufbaut oder anfordert. Die Trennung der Kommunikationskanäle kann aber alternativ oder zusätzlich dadurch erfolgen, dass jede Applikation die Daten, die sie sendet, mit einem Schlüssel verschlüsselt, der von dem Schlüssel der anderen Applikation verschieden ist. In gleicher Weise ist es bevorzugt, wenn jede Applikation Daten verschlüsselt empfängt, wobei auch hier der Schlüssel der einen Applikation von dem Schlüssel der anderen Applikation verschieden ist. Außerdem ist es bevorzugt, die Authentizität von Nachrichten über digitale Signaturen abzusichern.

Um eine Transaktion durchzuführen, werden zunächst Transaktionsdaten für die Transaktion mittels der ersten Applikation auf der Zustandsmaschine erzeugt. Dies erfolgt insbesondere dadurch, dass der Benutzer die Transaktionsdaten eingibt, zumindest einen Teil der Transaktionsdaten eingibt. Zu den Transaktionsdaten gehören insbesondere der zu transferierende Geldbetrag, einschließlich einer etwaigen Währungsinformation, und der Empfänger, der üblicherweise mittels einer Kontonummer und einer Bankleitzahl identifiziert wird. Der Benutzer kann beim Erzeugen der Transaktionsdaten unterstützt werden, bspw. durch existierende Vorlagen oder vordefinierte Empfänger. Bei einer Transaktion kann es sich aber insbesondere auch um eine Einkaufstransaktion oder eine Transaktion im Zusammenhang mit einer Zugangsberechtigung handeln.

In einem weiteren Schritt werden die Transaktionsdaten mittels der ersten Applikation gesendet, wobei die erste Applikation Teil eines ersten Kommunikationskanals ist. Das Ziel dieses Sendens ist insbesondere ein Server eines Geldinstituts, der dafür ausgebildet ist, Anforderungen zum Durchführen einer Transaktion entgegenzunehmen. Die Zustandsmaschine hat durch das Senden der Transaktionsdaten angezeigt, dass eine Transaktion durchgeführt werden soll. Es fehlt nun allerdings noch die für das Durchführen der Transaktion erforderliche Autorisierung mittels einer Transaktionsbestätigung.

In einem weiteren Schritt sendet die erste Applikation oder, was bevorzugt ist, die zweite Applikation eine auf die Transaktionsdaten bezogene Transaktionsbestätigungsanforderung, wobei die zweite Applikation Teil eines zweiten Kommunikationskanals ist. Auf diese Weise zeigt die Zustandsmaschine an, bevorzugt mittels der zweiten Applikation, dass zum Autorisieren einer Transaktion eine Transaktionsbestätigung benötigt wird. Auch die Transaktionsbestätigungsanforderung wird insbesondere an einen Server des Geldinstituts gesendet.

Die zweite Applikation stellt dann die Transaktionsbestätigung bereit. Dies bedeutet, dass die Transaktionsbestätigung für eine weitere Verwendung auf der Zustandsmaschine bereit gestellt wird. Bei einer bevorzugten Ausführungsform wird die Transaktionsbestätigung auf einem Bildschirm der Zustandsmaschine angezeigt oder über eine akustische Ausgabe ausgegeben.

Schließlich wird die Transaktionsbestätigung mittels der ersten Applikation abgefragt. Das Abfragen kann insbesondere dadurch erfolgen, dass dem Benutzer zur Eingabe der Transaktionsbestätigung ein Eingabefeld zur Verfügung gestellt wird. Erst mittels der Transaktionsbestätigung ist es möglich, die Transaktion zu autorisieren und damit insgesamt durchzuführen.

Um sicherzustellen, dass die Trennung der Kommunikationskanäle die gewünschte Sicherheit erbringt, hat die erste Applikation keinen Zugriff auf den zweiten Kommunikationskanal. Dies bedeutet, dass selbst wenn ein Angreifer Kontrolle über die erste Applikation erlangt, kann der Angreifer auf diese Weise keinen Zugriff auf den zweiten Kommunikationskanal erlangen. Bevorzugt hat auch die zweite Applikation keinen Zugriff auf den ersten Kommunikationskanal.

Ein Aspekt des Sicherheitskonzepts soll anhand der folgenden Beispiele verdeutlicht werden. Es sei zunächst angenommen, dass sich ein Angreifer Zugang zu der Übertragung der Transaktionsdaten verschafft hat, und diese manipuliert hat. Da die Transaktionsbestätigung mittels der zweiten Applikation bereitgestellt wird, bleibt dem Angreifer die Transaktionsbestätigung verborgen. Er kann die manipulierte Transaktion nicht bestätigen. Nun sei ein anderer Fall angenommen, bei dem ein Angreifer Zugriff auf die Transaktionsbestätigung erlangt hat, die im zweiten Kommunikationskanal übertragen wurde. Verwendet der Angreifer die Transaktionsbestätigung, so kann er nur die vom Benutzer beauftragte Transaktion bestätigen. Eine Manipulation der Transaktionsbestätigung führt zwangsläufig zu einer ungültigen Transaktionsbestätigung, mit der keine Transaktion durchgeführt werden kann.

Auf diese Weise zeigt sich, dass mittels der zwei Applikationen und der zwei Kommunikationskanäle die gewünschte Sicherheit erreicht werden kann.

Unter einer Zustandsmaschine sollen im Rahmen dieser Erfindung alle Systeme der Datenverarbeitung verstanden werden, die programmatische Instruktionen abarbeiten können, insbesondere Serverfarmen, Server, Workstations, Desktops, Personal Computer, Laptops, Notebooks, Netbooks, Tablet-Computer, Smartphones, Handys, TV-Geräte und Settop-Boxen.

Es sei darauf hingewiesen, dass die erste und/oder die zweite Applikation aus zwei oder mehr Komponenten bestehen können. Dabei können die Komponenten jeweils einer Applikation zusammenarbeiten und den jeweiligen Kommunikationskanal nutzen. Es soll aber verhindert werden, dass eine Komponente der einen Applikation Zugriff auf die andere Applikation, insbesondere auf deren Kommunikationskanal, erhält. Würde es an dieser Trennung fehlen, wäre die gewünschte Kanaltrennung nicht mehr gegeben und ein Angreifer könnte möglicherweise eine unberechtigte Transaktion beauftragen.

Außerdem wird angemerkt, dass der Begriff "zum Durchführen" bedeutet, dass zur vollständigen Durchführung einer Transaktion noch weitere Verfahrensschritte gehören können, z.B. das Überprüfen der Bonität des Kontoinhabers, und somit keine abschließende Aufzählung der Verfahrensschritte beabsichtigt ist.

Damit ist die Aufgabe vollständig gelöst.

Bei einer bevorzugten Ausgestaltung der Erfindung hat die erste Applikation keinen Zugriff auf Daten der zweiten Applikation, sofern die zweite Applikation Daten nicht gezielt für einen Abruf zur Verfügung stellt, und insbesondere hat die zweite Applikation keinen Zugriff auf Daten der ersten Applikation, sofern die erste Applikation Daten nicht gezielt für einen Abruf zur Verfügung stellt.

Auf diese Weise kann eine höhere Sicherheit erzielt werden. Es wird so verhindert, dass ein Angreifer, der, wie bereits erläutert, von der ersten Applikation aus keinen Zugriff auf den zweiten Kommunikationskanal hat, die über den zweiten Kommunikationskanal übertragenen Daten aus einem Datenbereich der zweiten Applikation ausliest. Insbesondere ist es bevorzugt, dass auch die zweite Applikation keinen Zugriff auf Daten der ersten Applikation hat, sofern die erste Applikation Daten nicht gezielt für einen Abruf zur Verfügung stellt. Der Zugriff kann einerseits programmatisch verhindert werden, insbesondere, indem die zweite Applikation und bevorzugt auch die erste Applikation ihre Daten nur verschlüsselt im Speicher ablegen. Wenn die Daten verschlüsselt sind, kann zwar ein Dritter auf den physikalischen Inhalt der Speicherzellen zugreifen, der jedoch ohne Kenntnis des Schlüssels keine Daten darstellt.

Bei einer besonders bevorzugten Ausführungsform werden die erste und die zweite Applikation auf einem Betriebssystem ausgeführt, das bereits systembedingt derartige unbefugte Zugriffe verhindert. Bevorzugt wird dabei eine Sandboxing-Funktionalität benutzt, bei der jede Applikation einen ihr zugewiesenen Arbeitsbereich erhält. Eine solche Funktionalität bieten insbesondere die Betriebssysteme iOS oder iPhone OS der Firma Apple, Android der Open Handset Alliance und Windows Phone 7 der Firma Microsoft.

Bei einer weiteren vorteilhaften Ausgestaltung der Erfindung werden die erste und die zweite Applikation in einer Laufzeitumgebung ausgeführt, wobei die Laufzeitumgebung dafür ausgebildet ist, die erste und die zweite Applikation so voneinander zu isolieren, dass ein Datenaustausch zwischen der ersten und der zweiten Applikation nicht erfolgen kann oder nur mittels eines Datenbereichs erfolgen kann, auf dessen Dateninhalt kein Zugriff durch eine nicht-autorisierte dritte Applikation erfolgen kann.

Auch diese Ausgestaltung erhöht die Sicherheit, da die erste und die zweite Applikation mittels einer systembedingten Eigenschaft der Laufzeitumgebung voneinander isoliert werden. Diese Isolation führt insbesondere dazu, dass eine nicht-autorisierte dritte Applikation weder auf die erste noch auf die zweite Applikation zugreifen kann. Es bleibt dennoch möglich, Daten gezielt zwischen der ersten und der zweiten Applikation mittels des Datenbereichs auszutauschen, auf den die nicht-autorisierte dritte Applikation ebenfalls keinen Zugriff hat. Auch hier wird bevorzugt die zuvor genannte Sandboxing-Funktionalität eingesetzt.

Konkret ist es bevorzugt, die Transaktionsbestätigung in dem Datenbereich des Speichers der Zustandsmaschine bereitzustellen, von wo aus sie von der ersten Applikation ausgelesen werden kann. Bei dieser Ausführungsform wird die Transaktionsbestätigung bevorzugt verschlüsselt in den Speicher geschrieben, wobei der Schlüssel zum Entschlüsseln nur der ersten und der zweiten Applikation bekannt ist, insbesondere nur der ersten Applikation bekannt ist. Eine solche Art der Verschlüsselung wird insbesondere unter Verwendung einer RSA-Verschlüsselung durchgeführt.

Bei einer weiteren vorteilhaften Ausgestaltung der Erfindung weist das Verfahren ferner den Schritt eines Sendens der Transaktionsbestätigung mittels der ersten Applikation auf.

Mit diesem Schritt werden die benutzerseitig erforderlichen Aktionen abgeschlossen. Die Transaktion kann dann, ggf. nach weiteren Prüfungen, von einem Server des Transaktionsausführers durchgeführt werden.

Bei einer weiteren vorteilhaften Ausgestaltung der Erfindung weist das Verfahren ferner den Schritt eines Prüfens der Laufzeitumgebung und/oder der Zustandsmaschine auf eine sicherheitsrelevante Manipulation auf und, falls eine sicherheitsrelevante Manipulation festgestellt wird, einen Schritt des Beendens des Verfahrens.

In der Praxis kann nicht ausgeschlossen werden, dass die Zustandsmaschine und/oder die Laufzeitumgebung sicherheitsrelevant manipuliert worden sind. Dies kann insbesondere durch Viren, Trojaner oder sonstige Schadsoftware erfolgen, aber auch durch gezielte Manipulationen des Users, mit denen er Systemrestriktionen entfernt, wie insbesondere mittels Jailbreaking oder Rooting. Dadurch kann es möglich werden, dass die Applikationen wechselseitig auf ihre Kommunikationskanäle oder auf die jeweils andere Applikation zugreifen können. Dann ist jedoch die gewünschte Sicherheit möglicherweise nicht mehr gewährleistet.

Die vorgeschlagene Ausgestaltung prüft daher, ob eine sicherheitsrelevante Manipulation vorliegt und beendet das Verfahren gegebenenfalls. Liegt eine Manipulation vor, werden - statt das beschriebene Verfahren zum Durchführen einer Transaktion durchzuführen - insbesondere eine oder mehrere der folgenden Maßnahmen ergriffen: die erste und/oder die zweite Applikation werden beendet, die erste und/oder die zweite Applikation werden gesperrt, die erste und/oder die zweite Applikation werden gelöscht, der Benutzer wird über die Manipulation informiert oder die Funktionalität der ersten und/oder zweiten Applikation wird eingeschränkt.

Bei einer weiteren vorteilhaften Ausgestaltung der Erfindung weist das Verfahren ferner den Schritt eines Abfragens einer Zugangsberechtigung mittels der ersten Applikation und/oder der zweiten Applikation auf.

Diese Maßnahme stellt sicher, dass nur ein berechtigter Benutzer Zugang zur ersten und/oder zweiten Applikation erhält.

Bei einer weiteren vorteilhaften Ausgestaltung der Erfindung weist das Verfahren ferner den Schritt eines Darstellens einer neutralen Anzeige auf, wenn ein Wechsel von der ersten Applikation und/oder der zweiten Applikation in einen anderen Zustand erfolgt.

Die heutigen Betriebssysteme erlauben es Benutzern auf besonders einfache Weise, schnell zwischen verschiedenen Applikationen zu wechseln. Einige Betriebssysteme haben dabei die Funktion, dass die Bildschirmdarstellung gespeichert wird, die bei einem Wechsel von der Applikation in einen anderen Zustand gespeichert wird. Als anderer Zustand sollen dabei insbesondere einer oder mehrere der folgenden Zustände verstanden werden: die Applikation wird minimiert, die Applikation verliert den Fokus, die Applikation wird in den Hintergrund geschoben, die Applikation wird verlassen, die Applikation wird durch eine andere Applikation überlagert oder die Applikation wird beendet. Da die erste Applikation, gegebenenfalls auch die zweite Applikation, schützenswerte Daten darstellen könnte, wird mit dem Schritt des Darstellens einer neutralen Anzeige erreicht, dass der Bildschirm mit der neutralen Anzeige gespeichert wird und nicht mit der Darstellung möglicher schützenswerter Daten.

Bei einer weiteren vorteilhaften Ausgestaltung der Erfindung weist das Verfahren ferner den Schritt des Speicherns der Transaktionsbestätigung in dem Datenbereich mittels der zweiten Applikation auf und den Schritt des Lesens der Transaktionsbestätigung aus dem Datenbereich mittels der ersten Applikation.

Auf diese Weise kann die Transaktionsbestätigung auf einfache Weise von der zweiten Applikation in die erste Applikation übertragen werden. Wenn die Transaktionsbestätigungsanforderung mittels der ersten Applikation gesendet wird, ist es bevorzugt, dass das Speichern der Transaktionsbestätigung in dem Datenbereich mittels der zweiten Applikation nicht automatisch erfolgt, sondern eine Aktion des Benutzers erfordert. Ansonsten könnte ein Angreifer, der die erste Applikation manipuliert, auch in den Besitz der Transaktionsbestätigung gelangen. Es ist daher insbesondere im Zusammenhang mit dieser Ausgestaltung bevorzugt, dass die Transaktionsbestätigungsanforderung mittels der zweiten Applikation gesendet wird.

Bei einer weiteren vorteilhaften Ausgestaltung weist das Verfahren ferner den Schritt eines Signalisierens eines Sendens der Transaktionsbestätigungsanforderung und/oder einer Bereitstellung der Transaktionsbestätigung auf, wobei das Signalisieren außerhalb der ersten Applikation und der zweiten Applikation erfolgt.

Diese Ausgestaltung bietet eine Möglichkeit, Versuche von Dritten zu entdecken, eine unberechtigte Transaktion durchzuführen. Erhält der Benutzer eine Nachricht, dass er angeblich eine Transaktionsbestätigungsanforderung gesendet hat und/oder dass er eine Transaktionsbestätigung erhalten hat, so wird der unberechtigte Versuch offenbar, wenn der Benutzer gar keine Transaktion beauftragt hat. Das Signalisieren erfolgt bevorzugt dadurch, dass der Benutzer eine Nachricht erhält, bevorzugt eine Push-Nachricht. Die Information, dass eine Transaktionsbestätigungsanforderung gesendet wurde und/oder eine Transaktionsbestätigung bereitgestellt wurde, erhält die Zustandsmaschine bevorzugt von einem Server des Transaktionsausführers, der für das Durchführen von Transaktionen zuständig ist.

Bei einer weiteren vorteilhaften Ausgestaltung der Erfindung ist der Transaktionsbestätigung eine Datums- und eine Uhrzeitinformation zugeordnet.

Diese Ausgestaltung erhöht die Sicherheit, da sich der Benutzer davon überzeugen kann, dass die erhaltene Transaktionsbestätigung zu einer gerade vom Benutzer beauftragten Transaktion passt.

Bei einer weiteren vorteilhaften Ausgestaltung der Erfindung speichert die erste Applikation und/oder die zweite Applikation zumindest Teile, insbesondere alle, der auf die Transaktion bezogenen Daten verschlüsselt.

Diese Ausgestaltung erhöht die Sicherheit. Dabei wird es als besonders vorteilhaft angesehen, wenn zumindest eine oder mehrere der nachfolgenden Daten verschlüsselt gespeichert werden: Transaktionsbestätigung, einer oder mehrere öffentliche Schlüssel, einer oder mehrere private Schlüssel, Betrag, Empfänger oder Transaktionsdaten.

Bei einer weiteren vorteilhaften Ausgestaltung der Erfindung erfolgt eine Kommunikation über den ersten und/oder den zweiten Kommunikationskanal verschlüsselt.

Auch diese Maßnahme ermöglicht eine höhere Sicherheit und erschwert eine Manipulation.

Bei einer weiteren vorteilhaften Ausgestaltung der Erfindung ist die Zustandsmaschine als portables Gerät, insbesondere als Smartphone, Handy, Tablet-Computer, Netbook, Notebook oder Laptop ausgebildet.

Diese Ausgestaltung ermöglicht die Durchführung des Verfahrens auf eine einfache und ortsungebundene Art und Weise. Außerdem kann die Zustandsmaschine auch als TV-Gerät oder Settop-Box ausgeführt sein.

Gemäß einem weiteren Aspekt der Erfindung wird die Aufgabe gelöst durch ein Verfahren zum Durchführen einer Transaktion auf einer Zustandsmaschine unter Verwendung eines Datenaustauschs auf einem ersten und einem zweiten Kommunikationskanal, wobei der erste und der zweite Kommunikationskanal voneinander verschieden sind, das Verfahren mit den folgenden Schritten:
- Empfangen von Transaktionsdaten für eine Transaktion von einer zweiten Zustandsmaschine, wobei die Transaktionsdaten auf einem ersten Kommunikationskanal empfangen werden,
- Erzeugen einer auf die Transaktionsdaten bezogenen Transaktionsbestätigung,
- Empfangen einer Transaktionsbestätigungsanforderung von der zweiten Zustandsmaschine, wobei die Transaktionsbestätigungsanforderung auf einem zweiten Kommunikationskanal empfangen wird,
- Senden der Transaktionsbestätigung an die zweite Zustandsmaschine auf dem zweiten Kommunikationskanal als Antwort auf die Transaktionsbestätigungsanforderung.

Die Sicherheit des Verfahrens wird auch hier wieder über einen ersten und einen zweiten Kommunikationskanal gewährleistet. Dabei werden über den ersten Kommunikationskanal Transaktionsdaten empfangen und, nachdem in einer Transaktionsbestätigungsanforderung über den zweiten Kommunikationskanal eine Transaktionsbestätigung angefordert wurde, die Transaktionsbestätigung über den zweiten Kommunikationskanal gesendet. Die Sicherheit wird gewährleistet, indem von der zweiten Zustandsmaschine Transaktionsdaten für eine Transaktion auf dem ersten Kommunikationskanal und von derselben Zustandsmaschine eine Transaktionsbestätigungsanforderung auf dem zweiten Kommunikationskanal empfangen wird.

Es ist bevorzugt, dass die erste Zustandsmaschine überprüft, ob die Transaktionsdaten und die Transaktionsbestätigungsanforderung von derselben zweiten Zustandsmaschine empfangen werden. Fällt die Prüfung negativ aus, wird die Transaktionsbestätigung nicht gesendet. Des Weiteren ist es bevorzugt, dass die erste Zustandsmaschine prüft, ob der für das Senden der Transaktionsbestätigung vorgesehene Kommunikationskanal tatsächlich ein anderer ist als der Kommunikationskanal, über den die Transaktionsdaten empfangen wurden. Es ist insbesondere bevorzugt, dass die erste Zustandsmaschine prüft, dass die Applikation, die die Transaktionsdaten gesendet hat, eine andere Applikation ist als die, an die die Transaktionsbestätigung gesendet werden soll. Mit einer oder mehrerer dieser Maßnahmen kann die Sicherheit weiter erhöht werden. Fallen eine oder mehrere dieser Sicherheitsprüfungen negativ aus, wird das Verfahren beendet, insbesondere mit einer Fehlermeldung.

Bei einer weiteren vorteilhaften Ausgestaltung der Erfindung weist das Verfahren ferner den Schritt eines Sendens einer Nachricht an die zweite Zustandsmaschine auf einem dritten Kommunikationskanal im Zusammenhang mit dem Empfangen der Transaktionsbestätigungsanforderung und/oder dem Erzeugen der Transaktionsbestätigung und/oder dem Senden der Transaktionsbestätigung auf.

Wenn eine Transaktionsbestätigungsanforderung von der ersten Zustandsmaschine empfangen wird und/oder die erste Zustandsmaschine eine Transaktionsbestätigung sendet, wird die Nachricht mit einem Hinweis auf das jeweilige Ereignis gesendet. Auf diese Weise können, wie bereits erläutert, Versuche erkannt werden, unberechtigte Transaktionen durchzuführen. Wenn die erste Zustandsmaschine eine Nachricht an die zweite Zustandsmaschine auf einem dritten Kommunikationskanal sendet, insbesondere an eine dritte Applikation, bspw. als Push-Nachricht, kann der Benutzer den unberechtigten Versuch erkennen, wenn er gar keine Transaktion beauftragt hat.

Bei einem weiteren Aspekt der Erfindung wird die Aufgabe gelöst durch ein Verfahren zum Durchführen einer Transaktion in einem System mit einer ersten Zustandsmaschine und einer zweiten Zustandsmaschine unter Verwendung eines Datenaustauschs auf einem ersten und einem zweiten Kommunikationskanal, wobei der erste und der zweite Kommunikationskanal voneinander verschieden sind, das Verfahren mit den folgenden Schritten:
- auf der zweiten Zustandsmaschine, Erzeugen von Transaktionsdaten für eine Transaktion mittels der ersten Applikation,
- auf der zweiten Zustandsmaschine, Senden der Transaktionsdaten mittels der ersten Applikation, wobei die erste Applikation Teil eines ersten Kommunikationskanals ist,
- auf der ersten Zustandsmaschine, Empfangen der Transaktionsdaten auf dem ersten Kommunikationskanal,
- auf der ersten Zustandsmaschine, Erzeugen einer auf die Transaktionsdaten bezogenen Transaktionsbestätigung,
- auf der zweiten Zustandsmaschine, Senden einer auf die Transaktionsdaten bezogenen Transaktionsbestätigungsanforderung mittels der ersten Applikation oder der zweiten Applikation, wobei die zweite Applikation Teil eines zweiten Kommunikationskanals ist,
- auf der ersten Zustandsmaschine, Empfangen der Transaktionsbestätigungsanforderung,
- auf der ersten Zustandsmaschine, Senden der Transaktionsbestätigung an die zweite Zustandsmaschine auf dem zweiten Kommunikationskanal als Antwort auf die Transaktionsbestätigungsanforderung,
- auf der zweiten Zustandsmaschine, Bereitstellen der Transaktionsbestätigung mittels der zweiten Applikation,
- auf der zweiten Zustandsmaschine, Abfragen der Transaktionsbestätigung mittels der ersten Applikation.

Dieses Verfahren beschreibt das Zusammenspiel zwischen einer serverseitigen ersten Zustandsmaschine und einer benutzerseitigen zweiten Zustandsmaschine. Für dieses kombinierte Verfahren gelten alle zuvor gemachten Erläuterungen. Insbesondere lassen sich auch alle zuvor genannten bevorzugten Ausgestaltungen auf dieses Verfahren anwenden.

Bei einem weiteren Aspekt der Erfindung wird die Aufgabe gelöst durch ein computerlesbares Medium mit programmatischen Instruktionen, die, wenn sie auf mindestens einem Prozessor ausgeführt werden, den mindestens einen Prozessor veranlassen, ein zuvor beschriebenes Verfahren auszuführen.

Unter einem computerlesbaren Medium soll neben den bekannten diskreten Speichermedien, wie CD, DVD, USB-Stick, Festplatte, SSD (Solid State Disk) oder Speicherkarte, auch ein Speicher im Internet, wie z.B. ein Online-Shop oder ein AppStore verstanden werden, auch wenn die programmatischen Instruktionen nicht auf demselben physikalischen Speichermedium abgelegt sind, sondern möglicherweise verteilt sind.

Bei einem weiteren Aspekt der Erfindung wird die Aufgabe gelöst durch ein Benutzerendgerät zum Durchführen einer Transaktion unter Verwendung eines Datenaustauschs auf einem ersten und einem zweiten Kommunikationskanal, wobei der erste und der zweite Kommunikationskanal voneinander verschieden sind und wobei das Benutzerendgerät als Zustandsmaschine ausgeführt ist und einen Prozessor und einen Speicher mit programmatischen Instruktionen aufweist, die, wenn sie auf dem Prozessor ausgeführt werden, den Prozessor veranlassen, ein zuvor beschriebenes Verfahren auszuführen, das das Senden einer Transaktionsbestätigungsanforderung aufweist.

Bei einem weiteren Aspekt der Erfindung wird die Aufgabe gelöst durch einen Server zum Durchführen einer Transaktion unter Verwendung eines Datenaustauschs auf einem ersten und einem zweiten Kommunikationskanal, wobei der erste und der zweite Kommunikationskanal voneinander verschieden sind und wobei der Server als Zustandsmaschine ausgeführt ist und einen Prozessor und einen Speicher mit programmatischen Instruktionen aufweist, die, wenn sie auf dem Prozessor ausgeführt werden, den Prozessor veranlassen, ein zuvor beschriebenes Verfahren auszuführen, das das Empfangen einer Transaktionsbestätigungsanforderung aufweist. Dabei sei darauf hingewiesen, dass die Bedeutung des Begriffs Server nicht nur einen physikalischen Server, sondern auch den Verbund aus zwei oder mehr Servern, einen verteilten Server und eine Serverfarm umfasst.

Bei einem weiteren Aspekt der Erfindung wird die Aufgabe gelöst durch ein System mit einem Server und einem Benutzerendgerät zum Durchführen einer Transaktion unter Verwendung eines Datenaustauschs auf einem ersten und einem zweiten Kommunikationskanal, wobei der erste und der zweite Kommunikationskanal voneinander verschieden sind, wobei der Server als erste Zustandsmaschine ausgeführt ist und einen ersten Prozessor und einen ersten Speicher mit ersten programmatischen Instruktionen aufweist, wobei das Benutzerendgerät als zweite Zustandsmaschine ausgeführt ist und einen zweiten Prozessor und einen zweiten Speicher mit zweiten programmatischen Instruktionen aufweist, und wobei die ersten und zweiten Instruktionen, wenn sie auf dem ersten und zweiten Prozessor, jeweils entsprechend, ausgeführt werden, den ersten und zweiten Prozessor veranlassen, ein zuvor beschriebenes Verfahren auszuführen, das das Senden und Empfangen einer Transaktionsbestätigungsanforderung aufweist.

Bei einem weiteren Aspekt der Erfindung wird die Aufgabe gelöst durch die Verwendung eines Benutzerendgeräts zum Durchführen einer Transaktion unter Verwendung eines Datenaustauschs auf einem ersten und einem zweiten Kommunikationskanal, wobei der erste und der zweite Kommunikationskanal voneinander verschieden sind, insbesondere zum Durchführen eines zuvor beschriebenen Verfahrens, das das Senden einer Transaktionsbestätigungsanforderung aufweist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung näher dargestellt und werden in der nachfolgenden Beschreibung näher erläutert. Es zeigen:
- Fig. 1: ein erstes Ausführungsbeispiel eines Systems;
- Fig. 2: ein zweites Ausführungsbeispiel eines Systems;
- Fig. 3: ein erstes Ausführungsbeispiel eines Verfahrens zum Durchführen einer Transaktion;
- Fig. 4: ein Ausführungsbeispiel eines Benutzerendgeräts;
- Fig. 5: ein zweites Ausführungsbeispiel eines Verfahrens zum Durchführen einer Transaktion;
- Fig. 6: ein Ausführungsbeispiel eines Servers;

- Fig. 7: ein drittes Ausführungsbeispiel eines Verfahrens zum Durchführen einer Transaktion;
- Fig. 8: einen ersten vorteilhaften Verfahrensabschnitt in einem Verfahren gemäß Fig. 3, 5 oder 7;
- Fig. 9: einen zweiten vorteilhaften Verfahrensabschnitt in einem Verfahren gemäß Fig. 3, 5 oder 7;
- Fig. 10: einen dritten vorteilhaften Verfahrensabschnitt in einem Verfahren gemäß Fig. 3, 5 oder 7;
- Fig. 11: einen vierten vorteilhaften Verfahrensabschnitt in einem Verfahren gemäß Fig. 3, 5 oder 7;
- Fig. 12: einen fünften vorteilhaften Verfahrensabschnitt in einem Verfahren gemäß Fig. 3, 5 oder 7;
- Fig. 13: einen sechsten vorteilhaften Verfahrensabschnitt in einem Verfahren gemäß Fig. 3, 5 oder 7; und
- Fig. 14: einen siebten vorteilhaften Verfahrensabschnitt in einem Verfahren gemäß Fig. 3, 5 oder 7.

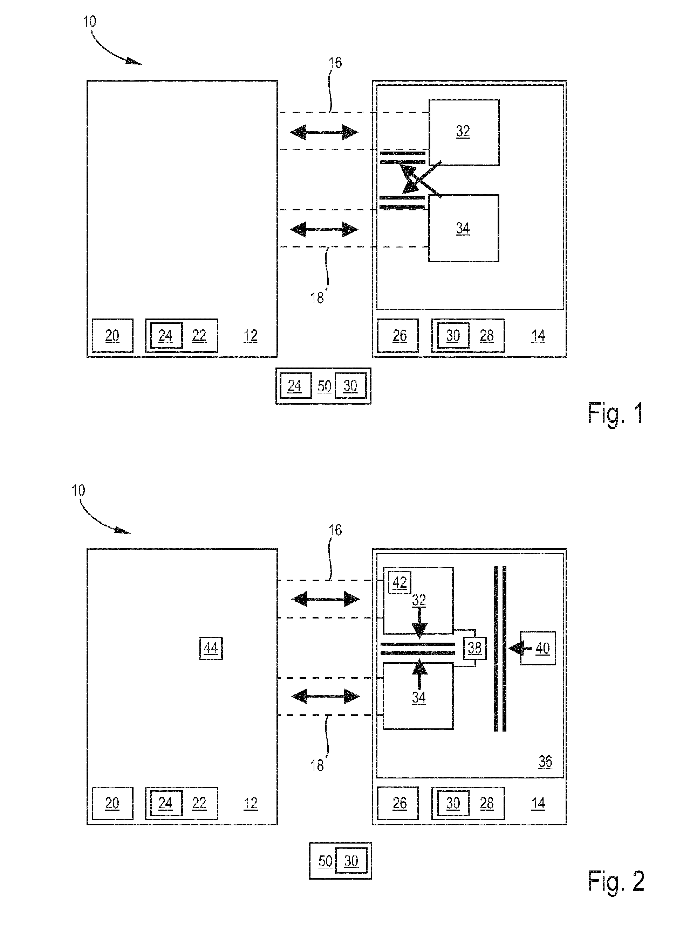

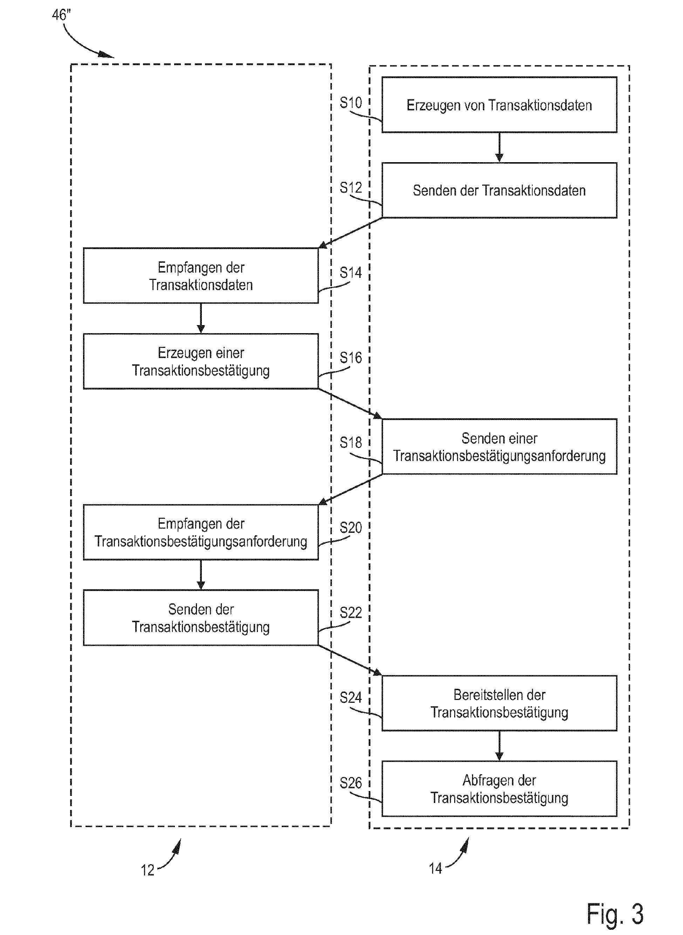

Fig. 1 zeigt ein System 10 mit einem Server 12 und einem Benutzerendgerät 14 zum Durchführen einer Transaktion unter Verwendung eines Datenaustauschs (symbolisch mit Doppelpfeilen dargestellt) auf einem ersten und einem zweiten Kommunikationskanal 16, 18, wobei der erste und der zweite Kommunikationskanal 16, 18 voneinander verschieden sind, wobei der Server 12 als erste Zustandsmaschine ausgeführt ist und einen ersten Prozessor 20 und einen ersten Speicher 22 mit ersten programmatischen Instruktionen 24 aufweist, wobei das Benutzerendgerät 14 als zweite Zustandsmaschine ausgeführt ist und einen zweiten Prozessor 26 und einen zweiten Speicher 28 mit zweiten programmatischen Instruktionen 30 aufweist, und wobei die ersten und zweiten Instruktionen 24, 30, wenn sie auf dem ersten und zweiten Prozessor 20, 26, jeweils entsprechend, ausgeführt werden, den ersten und zweiten Prozessor 20, 26 veranlassen, ein Verfahren 46" zum Durchführen einer Transaktion auszuführen, wie es insbesondere in Fig. 3 gezeigt ist.

Das Ausführen der programmatischen Instruktionen 30 etabliert die erste Applikation 32 und die zweite Applikation 34. Anhand der jeweils zwei parallelen dicken Linien ist symbolisch verdeutlicht, dass eine erste Applikation 32 nicht auf den zweiten Kommunikationskanal 18 zugreifen kann, und eine zweite Applikation 34 nicht auf den ersten Kommunikationskanal 16 zugreifen kann.

Fig. 1 zeigt außerdem ein computerlesbares Medium 50 mit programmatischen Instruktionen 24, 30, die, wenn sie auf mindestens einem Prozessor 20, 26 ausgeführt werden, den mindestens einen Prozessor 20, 26 veranlassen, ein nachfolgend beschriebenes Verfahren 46, 46', 46" auszuführen. Dabei weist das computerlesbare Medium 50 insbesondere solche programmatischen Instruktionen 30 auf, die, wenn sie auf dem Prozessor 26 ausgeführt werden, den Prozessor 26 veranlassen, das nachfolgend beschriebene Verfahren 46 auszuführen.

Fig. 2 zeigt ein zweites Ausführungsbeispiel eines Systems 10, das dem ersten Ausführungsbeispiel des Systems 10 im Wesentlichen ähnelt. Das System 10 gemäß dem zweiten Ausführungsbeispiel weist aber eine Laufzeitumgebung 36 auf, die dazu ausgebildet ist, die erste und die zweite Applikation 32, 34 so voneinander zu isolieren, dass ein Datenaustausch zwischen der ersten und der zweiten Applikation 32, 34 nicht erfolgen kann oder nur mittels eines Datenbereichs 38 erfolgen kann, auf dessen Dateninhalt kein Zugriff durch eine nicht-autorisierte dritte Applikation 40 erfolgen kann. Das computerlesbare Medium 50 ist hier als Speicherort im Internet für Applikationen, insbesondere als AppStore, ausgeführt.

Fig. 3 zeigt ein erstes Ausführungsbeispiel eines Verfahrens 46" zum Durchführen einer Transaktion. Das Verfahren 46" findet in einem System mit einer ersten Zustandsmaschine, hier der Server 12, und einer zweiten Zustandsmaschine, hier das Benutzerendgerät 14, Anwendung. Der Datenaustausch findet auf dem ersten und dem zweiten Kommunikationskanal 16, 18 statt, wobei der erste und der zweite Kommunikationskanal 16, 18 voneinander verschieden sind. Es sei darauf hingewiesen, dass die nachfolgenden Bezeichnungen "Server" und "Benutzerendgerät" ebenso ein entsprechendes Verfahren mit einer "ersten Zustandsmaschine" und einer "zweiten Zustandsmaschine" offenbaren.

In einem ersten Schritt S10 werden auf dem Benutzerendgerät 14 Transaktionsdaten 42 für eine Transaktion mittels der ersten Applikation 32 erzeugt. Insbesondere gibt ein Benutzer die für eine Überweisung erforderlichen Transaktionsdaten ein. Im Schritt S12 werden die Daten von dem Benutzerendgerät 14 mittels der ersten Applikation 32 an den Server 12 gesendet, wobei die erste Applikation 32 Teil des ersten Kommunikationskanals 16 ist.

Im Schritt S14 werden die Transaktionsdaten auf dem ersten Kommunikationskanal 16 vom Server 12 empfangen. Im Schritt S16 erzeugt der Server 12 daraufhin eine auf die Transaktionsdaten 42 bezogene Transaktionsbestätigung 44.

Im Schritt S18 werden mittels der ersten Applikation 32 oder, bevorzugt, mittels der zweiten Applikation 34 eine auf die Transaktionsdaten 42 bezogene Transaktionsbestätigungsanforderung gesendet, wobei die zweite Applikation 34 Teil des zweiten Kommunikationskanals 18 ist. Es sei darauf hingewiesen, dass der Hinweis, dass die Transaktionsbestätigungsanforderung auf die Transaktionsdaten 42 bezogen ist, weder der ersten noch der zweiten Applikation 32, 34 bekannt sein muss. Vielmehr ist es ausreichend, dass der Server 12 diese Beziehung im Hinblick auf die zuvor erhaltenen Transaktionsdaten 42 herstellen kann. Auf der Benutzerseite liegt dieses Wissen unmittelbar beim Benutzer vor, da ihm bekannt ist, dass er zum abschließenden Durchführen einer Transaktion eine entsprechende Transaktionsbestätigung, insbesondere eine TAN, benötigt.

Im Schritt S20 empfängt der Server 12 die Transaktionsbestätigungsanforderung, bevorzugt über den zweiten Kommunikationskanal 18 von der zweiten Applikation 34. Der Server 12 kann bspw. über eine Identifizierung des Benutzers oder über eine Identifizierung des Benutzerendgeräts 14 ermitteln, für welche Transaktion eine Transaktionsbestätigung angefordert wird. Daher sendet der Server 12 im Schritt S22 die entsprechende Transaktionsbestätigung 44 an das Benutzerendgerät 14 auf dem zweiten Kommunikationskanal 18 als Antwort auf die Transaktionsbestätigungsanforderung.

Auf dem Benutzerendgerät 14 wird im Schritt S24 die Transaktionsbestätigung 44 mittels der zweiten Applikation 34 bereitgestellt. Dies kann, wie bereits erläutert, durch eine entsprechende Anzeige oder durch ein Bereitstellen im Datenbereich 38 erfolgen. Schließlich wird im Schritt S26 auf dem Benutzerendgerät 14 die Transaktionsbestätigung 44 mittels der ersten Applikation 32 abgefragt. Dabei kann die Transaktionsbestätigung 44 vom Benutzer in die erste Applikation 32 eingegeben werden oder von der ersten Applikation 32, insbesondere durch eine Tätigkeit des Benutzers, wie z.B. das Betätigen eines Buttons oder Auswählens eines Menüpunkts, aus dem Datenbereich 38 ausgelesen werden.

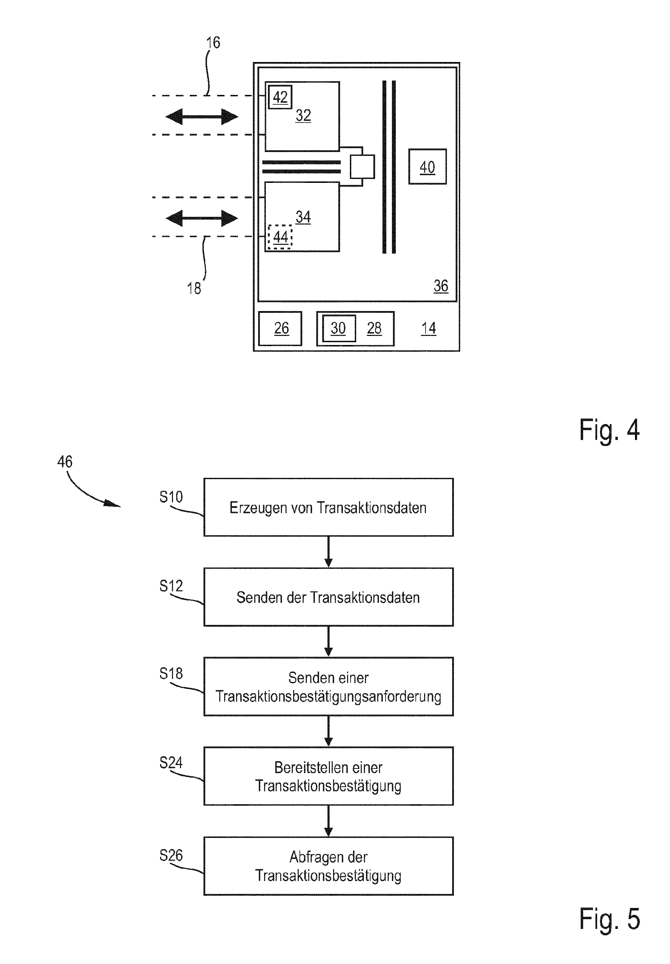

Fig. 4 zeigt eine Ausführungsform eines Benutzerendgeräts 14. Das Benutzerendgerät 14 entspricht dem Benutzerendgerät 14 aus dem System 10 gemäß Fig. 2 und muss daher nicht weiter erläutert werden. Die Transaktionsbestätigung 44 ist in einem gestrichelten Kästchen dargestellt, da sie vom Benutzerendgerät 14 nicht generiert wird, sondern lediglich bereitgestellt wird.

Fig. 5 zeigt eine weitere Ausführungsform eines Verfahrens 46 zum Durchführen einer Transaktion, dessen Schritte bereits im rechten Teil der Fig. 3 ausführlich erläutert wurden und auf dem Benutzerendgerät 14 gemäß Fig. 4 ausgeführt werden. Wie bereits dem rechten Teil der Fig. 3 zu entnehmen ist, werden in einem ersten Schritt S10 Transaktionsdaten 42 von der ersten Applikation 32 erzeugt, die dann im Schritt S12 von der ersten Applikation 32 gesendet werden. In einem weiteren Schritt S18 sendet das Benutzerendgerät 14 eine Transaktionsbestätigungsanforderung. Diese wird dann im Schritt S24 auf dem Benutzerendgerät 14 mittels der zweiten Applikation 34 bereitgestellt. Schließlich wird im Schritt S26 die Transaktionsbestätigung 44 mittels der ersten Applikation 32 auf dem Benutzerendgerät 14 abgefragt. Es sei bezüglich der Figs. 4 und 5 darauf hingewiesen, dass die Bezeichnung "Benutzerendgerät" ebenso ein entsprechendes Verfahren mit einer "Zustandsmaschine" offenbart.

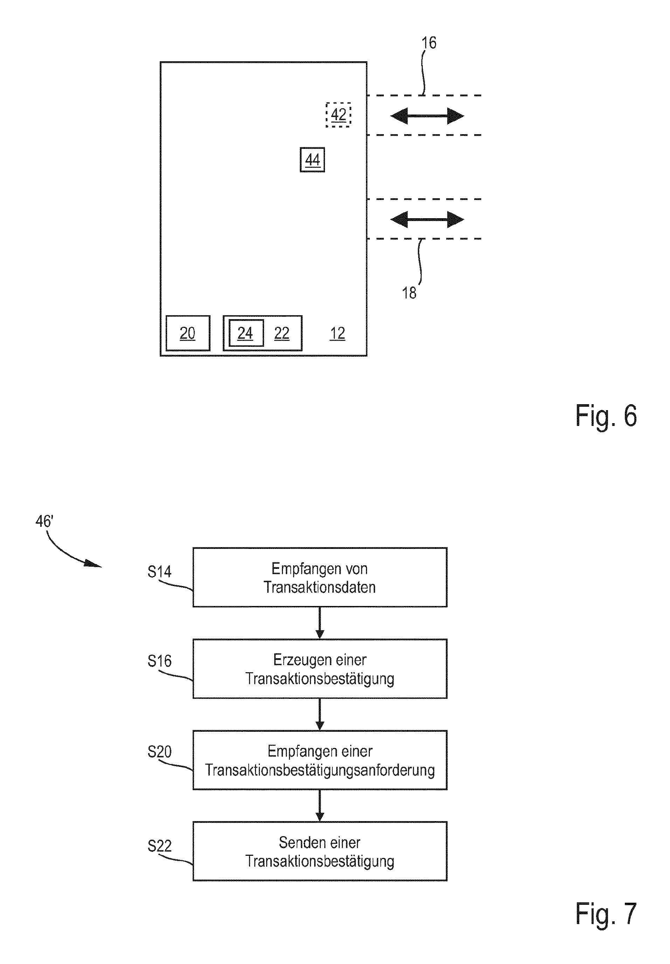

Fig. 6 zeigt eine Ausführungsform eines Servers 12. Der Server 12 entspricht dem Server 12 aus dem System 10 gemäß Fig. 2 und wird daher nicht näher erläutert. Die Transaktionsdaten 42 sind in einem gestrichelten Kästchen dargestellt, da sie nicht vom Server 12 erzeugt werden, sondern lediglich vom Server 12 empfangen werden.

Fig. 7 zeigt eine weitere Ausführungsform eines Verfahrens 46' zum Durchführen einer Transaktion, dessen Schritte bereits im linken Teil der Fig. 3 ausführlich erläutert wurden und auf dem Server 12 gemäß Fig. 6 ausgeführt werden. In einem ersten Schritt S14 Transaktionsdaten 42 empfangen. Zu diesen Transaktionsdaten wird in einem weiteren Schritt S16 eine Transaktionsbestätigung 44 erzeugt, die den Transaktionsdaten zugeordnet ist. Nachdem im Schritt S20 eine Transaktionsbestätigungsanforderung empfangen wurde, wird im Schritt S22 die Transaktionsbestätigung 44 gesendet. Es sei bezüglich der Figs. 6 und 7 darauf hingewiesen, dass die Bezeichnung "Server" ebenso ein entsprechendes Verfahren mit einer "Zustandsmaschine" offenbart

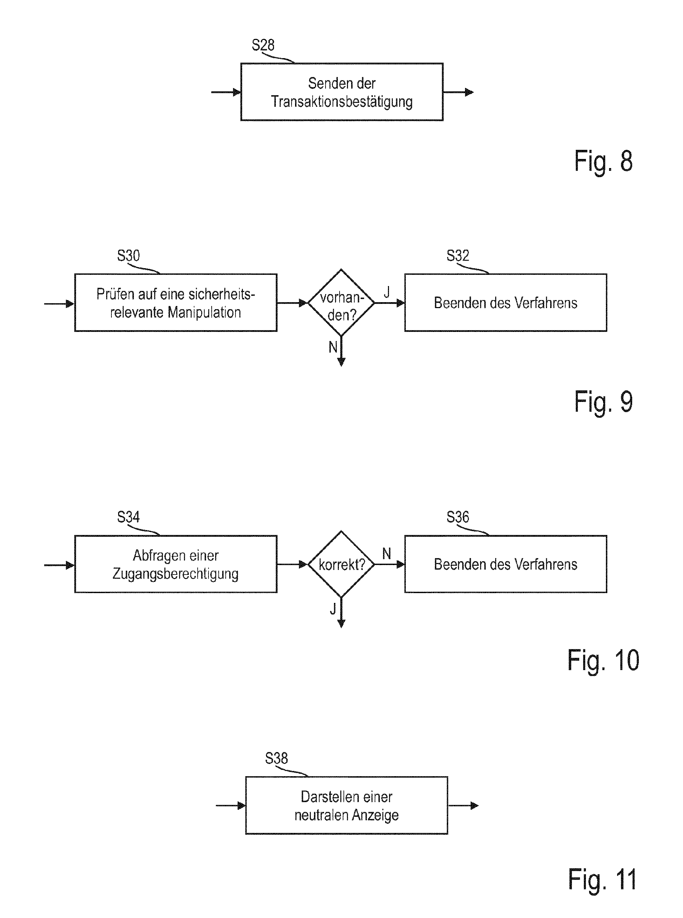

Fig. 8 zeigt einen weiteren Verfahrensschritt S28, bei dem die zweite Zustandsmaschine bzw. das Benutzerendgerät 14 die Transaktionsbestätigung mittels der ersten Applikation 32 sendet. Das Ziel ist dabei bevorzugt die erste Zustandsmaschine bzw. der Server 12. Der Schritt S28 schließt sich bevorzugt an den Verfahrensschritt S26 aus Fig. 3 an. Nachdem der Server 12 geprüft hat, dass die jetzt empfangene Transaktionsbestätigung mit der vom Server 12 erzeugten Transaktionsbestätigung 44 übereinstimmt, kann die Transaktion abschließend durchgeführt werden.

Fig. 9 zeigt weitere vorteilhafte Verfahrensschritte, wobei im Schritt S30 die ersten Zustandsmaschine bzw. das Benutzerendgerät 14 und/oder die Laufzeitumgebung 36 auf eine sicherheitsrelevante Manipulation hin geprüft werden. Falls eine sicherheitsrelevante Manipulation vorhanden ist, verzweigt das Verfahren über den Pfad "J" zum Schritt S32, wo das hier beschriebene Verfahren 46, 46" beendet wird. Alternativ kann statt eines Beendens bevorzugt eine serverseitige Sperrung erfolgen und/oder ein Hinweis angezeigt werden. Wird keine sicherheitsrelevante Manipulation festgestellt, verzweigt das Verfahren über den Pfad "N" zum normalen Verfahrensablauf. Der Schritt S30 wird bevorzugt einem oder allen der Schritte S10, S18, S24, S26 vorgeschaltet. Werden diese Schritte bspw. dem Schritt S18 vorgeschaltet, so wird zunächst im Schritt S30 auf eine sicherheitsrelevante Manipulation geprüft und nur zum Schritt S18 verzweigt, wenn eine solche nicht vorhanden ist.

Fig. 10 zeigt weitere vorteilhafte Verfahrensschritte auf. Im Schritt S34 wird auf der zweiten Zustandsmaschine bzw. auf dem Benutzerendgerät 14 eine Zugangsberechtigung abgefragt, die erforderlich ist, um die Funktionen der ersten und/oder der zweiten Applikation 32, 34 nutzen zu können. Dabei wird insbesondere ein Passwort abgefragt. Nur mit der korrekten Zugangsberechtigung kann der Benutzer auf die erste und/oder die zweite Applikation 32, 34 zugreifen. Es ist bevorzugt, dass die erste und die zweite Applikation 32, 34 unabhängig voneinander jeweils eine Zugangsberechtigung abfragen. Ist die Zugangsberechtigung korrekt, verzweigt das Verfahren über den Pfad "J" in den normalen Verfahrensablauf. Ist die Zugangsberechtigung nicht korrekt, verzweigt das Verfahren über den Pfad "N" zum Schritt S36, wo das Verfahren beendet wird.

Fig. 11 zeigt einen weiteren vorteilhaften Verfahrensschritt. Im Schritt S38 wird auf der zweiten Zustandsmaschine bzw. auf dem Benutzerendgerät 14 eine neutrale Anzeige dargestellt. Der Schritt S38 wird, wie bereits erläutert, bevorzugt in einer oder mehrerer der folgenden Situationen ausgeführt: die Applikation wird minimiert, die Applikation verliert den Fokus, die Applikation wird in den Hintergrund geschoben, die Applikation wird verlassen, die Applikation wird durch eine andere Applikation überlagert oder die Applikation wird beendet.

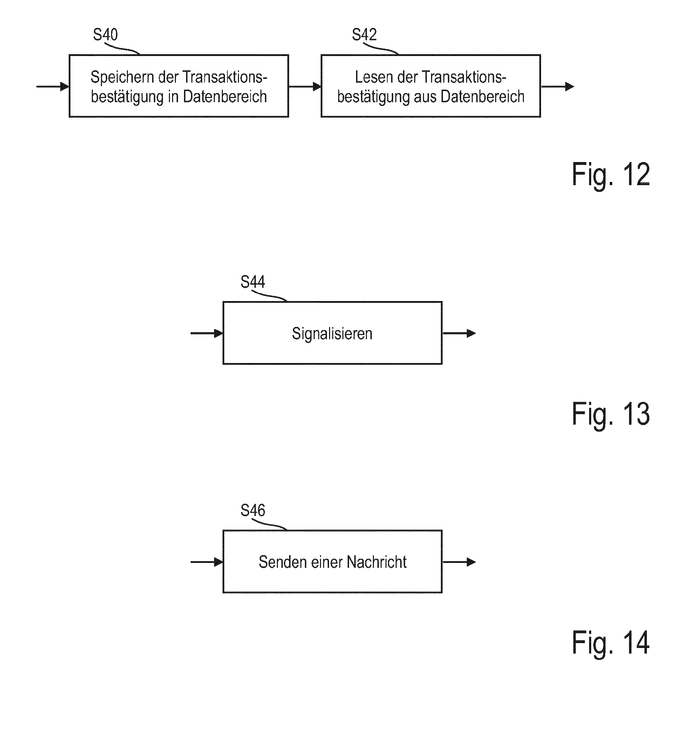

Fig. 12 zeigt weitere vorteilhafte Verfahrensschritte. Im Schritt S40 wird die Transaktionsbestätigung 44 im Datenbereich 38 gespeichert. Diese Speicherung erfolgt mittels der zweiten Applikation 34. Der Schritt S40 kann den Schritt S26 ersetzen oder ein Teil des Schritts S24 sein. Im Schritt S42 wird die Transaktionsbestätigung 44 aus dem Datenbereich 38 ausgelesen. Der Schritt S42 wird von der ersten Applikation 32 durchgeführt und kann den Schritt S26 ersetzen oder ein Teil des Schritts S26 sein.

Fig. 13 zeigt einen weiteren vorteilhaften Verfahrensschritt. Im Schritt S44 signalisiert die zweite Zustandsmaschine bzw. das Benutzerendgerät 14, dass eine Transaktionsbestätigungsanforderung gesendet wurde und/oder dass eine Transaktionsbestätigung 44 bereitgestellt wurde. Das Signalisieren findet bevorzugt durch eine entsprechende Anzeige und/oder einen Hinweis in einer Applikation statt, die von der ersten und der zweiten Applikation 32, 34 verschieden ist.

Fig. 14 zeigt einen weiteren vorteilhaften Verfahrensschritt. Im Schritt S46 sendet die erste Zustandsmaschine bzw. der Server 12 auf einem dritten Kommunikationskanal bevorzugt eine Nachricht im Zusammenhang mit dem Erzeugen der Transaktionsbestätigung 44, alternativ oder zusätzlich auch mit dem Empfangen der Transaktionsbestätigungsanforderung oder mit dem Senden der Transaktionsbestätigung 44.

Damit wurden mehrere Verfahren 46, 46', 46" offenbart, die auf einer zweiten Zustandsmaschine bzw. einem Benutzerendgerät 14 alleine oder auf einer ersten Zustandsmaschine bzw. einem Server 12 alleine oder auf einem System 10 laufen können. Ferner wurden ein entsprechendes Benutzerendgerät 14, ein Server 12 und ein System 10 offenbart. Außerdem wurden ein computerlesbares Medium 50 und eine Verwendung eines Benutzerendgeräts 14 zum Durchführen einer Transaktion offenbart. Die hier beschriebenen Verfahren 46, 46', 46" werden dabei insbesondere derart sicher ausgestaltet, dass sie für den Finanzverkehr als zulässig anerkannt werden können. Die vorliegende Anmeldung offenbart insbesondere die folgenden Aspekte, bei denen es sich nicht um Ansprüche handelt:
(A1) Verfahren 46 zum Durchführen einer Transaktion auf einer Zustandsmaschine 14 unter Verwendung eines Datenaustauschs auf einem ersten und einem zweiten Kommunikationskanal 16, 18, wobei der erste und der zweite Kommunikationskanal 16, 18 voneinander verschieden sind, das Verfahren 46 mit den folgenden Schritten:
   - Erzeugen S10 von Transaktionsdaten 42 für eine Transaktion mittels einer ersten Applikation 32,
   - Senden S12 der Transaktionsdaten 42 mittels der ersten Applikation 32, wobei die erste Applikation 32 Teil des ersten Kommunikationskanals 16 ist,
   - Senden S18 einer auf die Transaktionsdaten 42 bezogenen Transaktionsbestätigungsanforderung mittels der ersten Applikation 32 oder einer zweiten Applikation 34, wobei die zweite Applikation 34 Teil des zweiten Kommunikationskanals 18 ist,
   - Bereitstellen S24 einer Transaktionsbestätigung 44 mittels der zweiten Applikation 34, wobei die zweite Applikation 34 Teil eines zweiten Kommunikationskanals 18 ist, und
   - Abfragen S26 der Transaktionsbestätigung 44 mittels der ersten Applikation 32,
   wobei die erste Applikation 32 keinen Zugriff auf den zweiten Kommunikationskanal 18 hat und insbesondere die zweite Applikation 34 keinen Zugriff auf den ersten Kommunikationskanal 16 hat.
(A2) Verfahren nach Aspekt A1, wobei die erste Applikation 32 keinen Zugriff auf Daten der zweiten Applikation 34 hat, sofern die zweite Applikation 34 Daten nicht gezielt für einen Abruf zur Verfügung stellt, und wobei insbesondere die zweite Applikation 34 keinen Zugriff auf Daten der ersten Applikation hat 32, sofern die erste Applikation 32 Daten nicht gezielt für einen Abruf zur Verfügung stellt.
(A3) Verfahren nach Aspekt A1 oder A2, wobei die erste und die zweite Applikation 32, 34 in einer Laufzeitumgebung 36 ausgeführt werden, wobei die Laufzeitumgebung 36 dafür ausgebildet ist, die erste und die zweite Applikation 32, 34 so voneinander zu isolieren, dass ein Datenaustausch zwischen der ersten und der zweiten Applikation 32, 34 nicht erfolgen kann oder nur mittels eines Datenbereichs 38 erfolgen kann, auf dessen Dateninhalt kein Zugriff durch eine nicht-autorisierte dritte Applikation 40 erfolgen kann.
(A4) Verfahren nach einem der vorhergehenden Aspekte, ferner mit dem Schritt eines Sendens S28 der Transaktionsbestätigung 44 mittels der ersten Applikation 32.
(A5) Verfahren nach einem der vorhergehenden Aspekte, ferner mit den Schritten eines Prüfens S30 der Zustandsmaschine 14 und/oder der Laufzeitumgebung 36 auf eine sicherheitsrelevante Manipulation und, falls eine sicherheitsrelevante Manipulation festgestellt wird, des Beendens S32 des Verfahrens.
(A6) Verfahren nach einem der vorhergehenden Aspekte, ferner mit dem Schritt eines Abfragens S34 einer Zugangsberechtigung mittels der ersten Applikation 32 und/oder der zweiten Applikation 34.
(A7) Verfahren nach einem der vorhergehenden Aspekte, ferner mit dem Schritt eines Darstellens S38 einer neutralen Anzeige, wenn ein Wechsel von der ersten Applikation 32 und/oder der zweiten Applikation 34 in einen anderen Zustand erfolgt.
(A8) Verfahren nach einem der vorhergehenden Aspekte, ferner mit den Schritten des Speicherns S40 der Transaktionsbestätigung 44 in einem Datenbereich 38 mittels der zweiten Applikation 34 und des Lesens S42 der Transaktionsbestätigung 44 aus dem Datenbereich 38 mittels der ersten Applikation 32.
(A9) Verfahren nach einem der vorhergehenden Aspekte, ferner mit dem Schritt eines Signalisierens S44 eines Sendens S18 der Transaktionsbestätigungsanforderung und/oder einer Bereitstellung S24 der Transaktionsbestätigung 44, wobei das Signalisieren S44 außerhalb der ersten Applikation 32 und der zweiten Applikation 34 erfolgt.
(A10) Verfahren nach einem der vorhergehenden Aspekte, wobei der Transaktionsbestätigung 44 eine Datums- und eine Uhrzeitinformation zugeordnet ist.
(A11 ) Verfahren nach einem der vorhergehenden Aspekte, wobei die erste Applikation 32 und/oder die zweite Applikation 34 zumindest Teile, insbesondere alle, der auf die Transaktion bezogenen Daten verschlüsselt speichern.
(A12) Verfahren nach einem der vorhergehenden Aspekte, wobei eine Kommunikation über den ersten und/oder den zweiten Kommunikationskanal 16, 18 verschlüsselt erfolgt.
(A13) Verfahren nach einem der vorhergehenden Aspekte, wobei die Zustandsmaschine 14 als portables Gerät, insbesondere als Smartphone, Handy, Tablet-Computer, Netbook, Notebook oder Laptop ausgebildet ist.
(A14) Verfahren 46' zum Durchführen einer Transaktion auf einer Zustandsmaschine 12 unter Verwendung eines Datenaustauschs auf einem ersten und einem zweiten Kommunikationskanal 16, 18, wobei der erste und der zweite Kommunikationskanal 16, 18 voneinander verschieden sind, das Verfahren 46' mit den folgenden Schritten:
   - Empfangen S14 von Transaktionsdaten 42 für eine Transaktion von einer zweiten Zustandsmaschine 14, wobei die Transaktionsdaten 42 auf dem ersten Kommunikationskanal 16 empfangen werden,
   - Erzeugen S16 einer auf die Transaktionsdaten 42 bezogenen Transaktionsbestätigung,
   - Empfangen S20 einer Transaktionsbestätigungsanforderung von der zweiten Zustandsmaschine 14, wobei die Transaktionsbestätigungsanforderung auf dem zweiten Kommunikationskanal 18 empfangen wird,
   - Senden S22 der Transaktionsbestätigung 44 an die zweite Zustandsmaschine 14 auf dem zweiten Kommunikationskanal 18 als Antwort auf die Transaktionsbestätigungsanforderung.
(A15) Verfahren nach Aspekt A14, ferner mit dem Schritt eines Sendens S46 einer Nachricht an die zweite Zustandsmaschine 14 auf einem dritten Kommunikationskanal im Zusammenhang mit dem Empfangen S20 der Transaktionsbestätigungsanforderung und/oder dem Erzeugen der Transaktionsbestätigung 44 und/oder dem Senden S22 der Transaktionsbestätigung 44.
(A16) Verfahren 46" zum Durchführen einer Transaktion in einem System 10 mit einer ersten Zustandsmaschine 12 und einer zweiten Zustandsmaschine 14 unter Verwendung eines Datenaustauschs auf einem ersten und einem zweiten Kommunikationskanal 16, 18, wobei der erste und der zweite Kommunikationskanal 16, 18 voneinander verschieden sind, das Verfahren 46" mit den folgenden Schritten:
   - auf der zweiten Zustandsmaschine 14, Erzeugen S10 von Transaktionsdaten 42 für eine Transaktion mittels der ersten Applikation 32,
   - auf der zweiten Zustandsmaschine 14, Senden S12 der Transaktionsdaten 42 mittels der ersten Applikation 32, wobei die erste Applikation 32 Teil eines ersten Kommunikationskanals 16 ist,
   - auf der ersten Zustandsmaschine 12, Empfangen S14 der Transaktionsdaten 42 auf dem ersten Kommunikationskanal 16,
   - auf der ersten Zustandsmaschine 12, Erzeugen S16 einer auf die Transaktionsdaten 42 bezogenen Transaktionsbestätigung 44,
   - auf der zweiten Zustandsmaschine 14, Senden S18 einer auf die Transaktionsdaten 42 bezogenen Transaktionsbestätigungsanforderung mittels der ersten Applikation 32 oder der zweiten Applikation 34, wobei die zweite Applikation 34 Teil eines zweiten Kommunikationskanals 18 ist,
   - auf der ersten Zustandsmaschine 12, Empfangen S20 der Transaktionsbestätigungsanforderung,
   - auf der ersten Zustandsmaschine 12, Senden S22 der Transaktionsbestätigung 44 an die zweite Zustandsmaschine 14 auf dem zweiten Kommunikationskanal 18 als Antwort auf die Transaktionsbestätigungsanforderung,
   - auf der zweiten Zustandsmaschine14, Bereitstellen S24 der Transaktionsbestätigung 44 mittels der zweiten Applikation 34,
   - auf der zweiten Zustandsmaschine 14, Abfragen S26 der Transaktionsbestätigung 44 mittels der ersten Applikation 32.
(A17) Computerlesbares Medium 50 mit programmatischen Instruktionen 24; 30, die, wenn sie auf mindestens einem Prozessor 20; 26 ausgeführt werden, den mindestens einen Prozessor 20; 26 veranlassen, ein Verfahren 46; 46', 46" nach einem der Aspekte A1 bis A16 ausführen.
(A18) Benutzerendgerät 14 zum Durchführen einer Transaktion unter Verwendung eines Datenaustauschs auf einem ersten und einem zweiten Kommunikationskanal 16, 18, wobei der erste und der zweite Kommunikationskanal 16, 18 voneinander verschieden sind und wobei das Benutzerendgerät 14 als Zustandsmaschine ausgeführt ist und einen Prozessor 26 und einen Speicher 28 mit programmatischen Instruktionen 30 aufweist, die, wenn sie auf dem Prozessor 26 ausgeführt werden, den Prozessor 26 veranlassen, ein Verfahren 46 nach einem der Aspekte A1 bis A13 ausführen.
(A19) Server 12 zum Durchführen einer Transaktion unter Verwendung eines Datenaustauschs auf einem ersten und einem zweiten Kommunikationskanal 16, 18, wobei der erste und der zweite Kommunikationskanal 16, 18 voneinander verschieden sind und wobei der Server 12 als Zustandsmaschine ausgeführt ist und einen Prozessor 20 und einen Speicher 22 mit programmatischen Instruktionen 24 aufweist, die, wenn sie auf dem Prozessor 20 ausgeführt werden, den Prozessor 20 veranlassen, ein Verfahren 46' nach Aspekt A14 oder A15 ausführen.
(A20) System 10 mit einem Server 12 und einem Benutzerendgerät 14 zum Durchführen einer Transaktion unter Verwendung eines Datenaustauschs auf einem ersten und einem zweiten Kommunikationskanal 16, 18, wobei der erste und der zweite Kommunikationskanal 16, 18 voneinander verschieden sind, wobei der Server 12 als erste Zustandsmaschine ausgeführt ist und einen ersten Prozessor 20 und einen ersten Speicher 22 mit ersten programmatischen Instruktionen 24 aufweist, wobei das Benutzerendgerät 14 als zweite Zustandsmaschine ausgeführt ist und einen zweiten Prozessor 26 und einen zweiten Speicher 28 mit zweiten programmatischen Instruktionen 30 aufweist, und wobei die ersten und zweiten Instruktionen 24, 30, wenn sie auf dem ersten und zweiten Prozessor 20, 26, jeweils entsprechend, ausgeführt werden, den ersten und zweiten Prozessor 20, 26 veranlassen, ein Verfahren 46" nach Aspekt A16 ausführen.
(A21) Verwendung eines Benutzerendgeräts 14 zum Durchführen einer Transaktion unter Verwendung eines Datenaustauschs auf einem ersten und einem zweiten Kommunikationskanal 16, 18, wobei der erste und der zweite Kommunikationskanal 16, 18 voneinander verschieden sind, insbesondere zum Durchführen eines Verfahrens 46 nach einem der Aspekte A1 bis A13.

## Patentansprüche

1. Verfahren (46) zum Durchführen einer Transaktion auf einer Zustandsmaschine (14) unter Verwendung eines Datenaustauschs auf einem ersten und einem zweiten Kommunikationskanal (16, 18), wobei der erste und der zweite Kommunikationskanal (16, 18) voneinander verschieden sind, das Verfahren (46) mit den folgenden Schritten:
- Erzeugen (S10) von Transaktionsdaten (42) für eine Transaktion mittels einer ersten Applikation (32),
- Senden (S12) der Transaktionsdaten (42) mittels der ersten Applikation (32), wobei die erste Applikation (32) Teil des ersten Kommunikationskanals (16) ist,
- Senden (S18) einer auf die Transaktionsdaten (42) bezogenen Transaktionsbestätigungsanforderung mittels der ersten Applikation (32) oder einer zweiten Applikation (34), wobei die zweite Applikation (34) Teil des zweiten Kommunikationskanals (18) ist,
- Bereitstellen (S24) einer Transaktionsbestätigung (44) mittels der zweiten Applikation (34), wobei die zweite Applikation (34) Teil eines zweiten Kommunikationskanals (18) ist, und
- Abfragen (S26) der Transaktionsbestätigung (44) mittels der ersten Applikation (32),
wobei die erste Applikation (32) keinen Zugriff auf den zweiten Kommunikationskanal (18) hat und insbesondere die zweite Applikation (34) keinen Zugriff auf den ersten Kommunikationskanal (16) hat.

2. Verfahren nach Anspruch 1, wobei die erste Applikation (32) keinen Zugriff auf Daten der zweiten Applikation (34) hat, sofern die zweite Applikation (34) Daten nicht gezielt für einen Abruf zur Verfügung stellt, und wobei insbesondere die zweite Applikation (34) keinen Zugriff auf Daten der ersten Applikation hat (32), sofern die erste Applikation (32) Daten nicht gezielt für einen Abruf zur Verfügung stellt.

3. Verfahren nach Anspruch 1 oder 2, wobei die erste und die zweite Applikation (32, 34) in einer Laufzeitumgebung (36) ausgeführt werden, wobei die Laufzeitumgebung (36) dafür ausgebildet ist, die erste und die zweite Applikation (32, 34) so voneinander zu isolieren, dass ein Datenaustausch zwischen der ersten und der zweiten Applikation (32, 34) nicht erfolgen kann oder nur mittels eines Datenbereichs (38) erfolgen kann, auf dessen Dateninhalt kein Zugriff durch eine nicht-autorisierte dritte Applikation (40) erfolgen kann.

4. Verfahren nach einem der vorhergehenden Ansprüche, ferner mit dem Schritt eines Sendens (S28) der Transaktionsbestätigung (44) mittels der ersten Applikation (32).

5. Verfahren nach einem der vorhergehenden Ansprüche, ferner mit den Schritten eines Prüfens (S30) der Zustandsmaschine (14) und/oder der Laufzeitumgebung (36) auf eine sicherheitsrelevante Manipulation und, falls eine sicherheitsrelevante Manipulation festgestellt wird, eines Beendens (S32) des Verfahrens.

6. Verfahren nach einem der vorhergehenden Ansprüche, ferner mit den Schritten eines Speicherns (S40) der Transaktionsbestätigung (44) in einem Datenbereich (38) mittels der zweiten Applikation (34) und eines Lesens (S42) der Transaktionsbestätigung (44) aus dem Datenbereich (38) mittels der ersten Applikation (32).

7. Verfahren nach einem der vorhergehenden Ansprüche, ferner mit dem Schritt eines Signalisierens (S44) eines Sendens (S18) der Transaktionsbestätigungsanforderung und/oder einer Bereitstellung (S24) der Transaktionsbestätigung (44), wobei das Signalisieren (S44) außerhalb der ersten Applikation (32) und der zweiten Applikation (34) erfolgt.

8. Verfahren (46') zum Durchführen einer Transaktion auf einer Zustandsmaschine (12) unter Verwendung eines Datenaustauschs auf einem ersten und einem zweiten Kommunikationskanal (16, 18), wobei der erste und der zweite Kommunikationskanal (16, 18) voneinander verschieden sind, das Verfahren (46') mit den folgenden Schritten:
- Empfangen (S14) von Transaktionsdaten (42) für eine Transaktion von einer zweiten Zustandsmaschine (14), wobei die Transaktionsdaten (42) auf dem ersten Kommunikationskanal (16) empfangen werden,
- Erzeugen (S16) einer auf die Transaktionsdaten (42) bezogenen Transaktionsbestätigung,
- Empfangen (S20) einer Transaktionsbestätigungsanforderung von der zweten Zustandsmaschine (14), wobei die Transaktionsbestätigungsanforderung auf dem zweiten Kommunikationskanal (18) empfangen wird,
- Senden (S22) der Transaktionsbestätigung (44) an die zweite Zustandsmaschine (14) auf dem zweiten Kommunikationskanal (18) als Antwort auf die Transaktionsbestätigungsanforderung.

9. Verfahren nach Anspruch 8, ferner mit dem Schritt eines Sendens (S46) einer Nachricht an die zweite Zustandsmaschine (14) auf einem dritten Kommunikationskanal im Zusammenhang mit dem Empfangen (S20) der Transaktionsbestätigungsanforderung und/oder dem Erzeugen der Transaktionsbestätigung (44) und/oder dem Senden (S22) der Transaktionsbestätigung (44).

10. Verfahren (46") zum Durchführen einer Transaktion in einem System (10) mit einer ersten Zustandsmaschine (12) und einer zweiten Zustandsmaschine (14) unter Verwendung eines Datenaustauschs auf einem ersten und einem zweiten Kommunikationskanal (16, 18), wobei der erste und der zweite Kommunikationskanal (16, 18) voneinander verschieden sind, das Verfahren (46") mit den Schritten des Verfahrens (46) nach einem der Ansprüche 1 bis 7 und mit den Schritten des Verfahrens (46') nach einem der Ansprüche 8 oder 9.

11. Computerlesbares Medium (50) mit programmatischen Instruktionen (24; 30), die, wenn sie auf mindestens einem Prozessor (20; 26) ausgeführt werden, den mindestens einen Prozessor (20; 26) veranlassen, ein Verfahren (46; 46', 46") nach einem der Ansprüche 1 bis 10 ausführen.

12. Benutzerendgerät (14) zum Durchführen einer Transaktion unter Verwendung eines Datenaustauschs auf einem ersten und einem zweiten Kommunikationskanal (16, 18), wobei der erste und der zweite Kommunikationskanal (16, 18) voneinander verschieden sind und wobei das Benutzerendgerät (14) als Zustandsmaschine ausgeführt ist und einen Prozessor (26) und einen Speicher (28) mit programmatischen Instruktionen (30) aufweist, die, wenn sie auf dem Prozessor (26) ausgeführt werden, den Prozessor (26) veranlassen, ein Verfahren (46) nach einem der Ansprüche 1 bis 7 ausführen.

13. Server (12) zum Durchführen einer Transaktion unter Verwendung eines Datenaustauschs auf einem ersten und einem zweiten Kommunikationskanal (16, 18), wobei der erste und der zweite Kommunikationskanal (16, 18) voneinander verschieden sind und wobei der Server (12) als Zustandsmaschine ausgeführt ist und einen Prozessor (20) und einen Speicher (22) mit programmatischen Instruktionen (24) aufweist, die, wenn sie auf dem Prozessor (20) ausgeführt werden, den Prozessor (20) veranlassen, ein Verfahren (46') nach Anspruch 8 oder 9 ausführen.

14. System (10) mit einem Server (12) und einem Benutzerendgerät (14) zum Durchführen einer Transaktion unter Verwendung eines Datenaustauschs auf einem ersten und einem zweiten Kommunikationskanal (16, 18), wobei der erste und der zweite Kommunikationskanal (16, 18) voneinander verschieden sind, wobei der Server (12) als erste Zustandsmaschine ausgeführt ist und einen ersten Prozessor (20) und einen ersten Speicher (22) mit ersten programmatischen Instruktionen (24) aufweist, wobei das Benutzerendgerät (14) als zweite Zustandsmaschine ausgeführt ist und einen zweiten Prozessor (26) und einen zweiten Speicher (28) mit zweiten programmatischen Instruktionen (30) aufweist, und wobei die ersten und zweiten Instruktionen (24, 30), wenn sie auf dem ersten und zweiten Prozessor (20, 26), jeweils entsprechend, ausgeführt werden, den ersten und zweiten Prozessor (20, 26) veranlassen, ein Verfahren (46") nach Anspruch 10 ausführen.

15. Verwendung eines Benutzerendgeräts (14) zum Durchführen einer Transaktion unter Verwendung eines Datenaustauschs auf einem ersten und einem zweiten Kommunikationskanal (16, 18), wobei der erste und der zweite Kommunikationskanal (16, 18) voneinander verschieden sind, insbesondere zum Durchführen eines Verfahrens (46) nach einem der Ansprüche 1 bis 7.
